# EUROPÄISCHE PATENTSCHRIFT

(11) **EP 1 695 562 B1**
(45) Veröffentlichungstag und Bekanntmachung des Hinweises auf die Patenterteilung: **24.02.2010**
(21) Anmeldenummer: 04802985.4
(22) Anmeldetag: 17.12.2004
(51) Int. Cl.: H04N 13/00, G02B 27/22

(54) **Autostereoskopische Anzeigevorrichtung für mehrere Benutzer und mit Positionsnachführung**
Multi-user autostereoscopic display with position tracking
afficheur autostéréoscopique à poursuite de position pour plusieurs utilisateurs

(30) Priorität: 18.12.2003 DE 10359403
(43) Veröffentlichungstag der Anmeldung: 30.08.2006
(73) Patentinhaber: SeeReal Technologies GmbH, 01307 Dresden (DE)
(72) Erfinder: SCHWERDTNER, Armin, 01259 Dresden (DE)
(86) Internationale Anmeldenummer: PCT/DE2004/002805
(87) Internationale Veröffentlichungsnummer: WO 2005/060270

(56) Entgegenhaltungen:
- EP-A- 0 570 179
- EP-A- 0 881 844
- WO-A-03/019952
- WO-A-03/053072
- US-A- 6 014 164

## Beschreibung

Die Erfindung betrifft ein autostereoskopisches Multi-User-Display mit einer Sweet-Spot-Einheit zum Fokussieren von Licht zu Strahlenbündeln auf die Augen eines oder mehrerer Betrachter und einer Bildmatrix, die das Licht der Sweet-Spot-Einheit alternierend mit zweidimensionalen Bildern von monoskopischen oder stereoskopischen Bildfolgen moduliert. Im vorliegenden Dokument bezeichnet der Begriff Multi-User-Display ein Gerät, mit dem mehrere Betrachter gleichzeitig und unabhängig voneinander alternierende Bilder von Bildfolgen als 3D-Darstellungen sehen können. Die vorliegende Erfindung nutzt eine zeitliche Verschachtelung der Einzelbilder für jedes Betrachterauge. Durch Anwendung dieser Darstellungsweise bleibt die Auflösung erhalten und wird nicht, wie bei einer räumlichen Verschachtelung, um einen Faktor, der der Anzahl der Ansichten entspricht, reduziert. Die Auflösung ist gleich der Auflösung der Bild-Matrix.

Das autostereoskopische Display soll folgende Bedingungen erfüllen: eine Multi-User-Fähigkeit, freie und unabhängige Beweglichkeit der Betrachter in einem weiten Blickfeld sowie ein wählbarer Zugriff auf verschiedene Bildfolgen im 2D- oder 3D-Modus. Weitere gewünschte Eigenschaften sind: hohe Bildqualität, Robustheit, Zuverlässigkeit, geringe Bautiefe, Unterstützung praktisch aller gängigen Bild- und Videoformate, einschließlich Kamera und Stereo-Kamera, sowie niedrige Kosten.

Mit stereoskopischen Displays können im Prinzip die Betrachter nur dann ein übersprechfreies Stereobild empfangen, wenn sich die Augen an vorbestimmten Positionen befinden. Diese werden in der Literatur auch als Sweet-Spots bezeichnet. Mit der vorliegenden Lösung wird angestrebt, eine großflächige homogene Lichtverteilung in ausgedehnte Sweet-Spots zu fokussieren, um diese mit einer Tracking- und Bildsteuerung abhängig vom aktuell dargestellten rechten bzw. linken Bild den Bewegungen der entsprechenden Augen von Betrachtern nachzuführen.

### Stand der Technik

In der Druckschrift EP 0 881 844 A2 ist ein Display für einen einzelnen Betrachter mit einem Tracking der Lichtquellen beschrieben. Dieses Display arbeitet im sequentiellen Modus. Zwei benachbarte Segmente eines Lichtquellen-Paares sind für das linke und rechte Auge des Betrachters bestimmt. Ist beispielsweise ein Segment für ein rechtes Betrachterauge eingeschaltet, so bildet ein erstes Lentikular dieses Segment in einer Vielzahl von Bildern auf eine Diffusorplatte ab. Diese dient nun als sekundäre Lichtquelle, die durch ihre Streueigenschaft über alle Linsen des zweiten Lentikulars eine Bildmatrix mit dem rechten Einzelbild durchsetzt, wobei das Licht auf ein rechtes Betrachterauge fokussiert wird.

Im folgenden Bild schaltet das Lichtquellen-Paar auf das Segment für das linke Auge und die Bildmatrix auf das linke Bild um. Bewegt sich der Betrachter aus der Stereozone heraus, wird auf das zweite, diesem Bereich zugeordnete Lichtquellen-Paar umgeschaltet.

Nachteilig ist die Verwendung der Diffusorplatte. Sie verhindert prinzipiell einen Multi-User-Betrieb, da die Diffusorplatte mit ihrer Vielzahl von sekundären Lichtquellen durch das zweite Lentikular periodisch fortgesetzt abgebildet wird.

Die Patentschrift WO 03/019952 A1 beschreibt eine Lösung für mehrere Betrachter mit 2D- und 3D-Darstellung und einem Trackingsystem. Das Display trägt vom Betrachter aus gesehen auf der Bildmatrix eine gesteuerte Richtungsoptik mit zwei Linsenanordnungen, die einen Shutter einschließen, um jedes Pixel des Bildes separat auf ein oder mehrere Betrachteraugen zu fokussieren. Jede Linsenanordnung enthält für jedes Pixel der Bildmatrix ein separates Linsenelement, welche das modulierte Licht des Pixels auf den Shutter fokussiert. Der Shutter weist pro Pixel eine Vielzahl kleinster Segmentöffnungen auf, um für jeden Betrachter entsprechend seiner Augenposition ein Segment je Linsenelement zu öffnen. Die Segmente werden durch ein entsprechendes zweites Linsenelement in der dem Shutter folgenden Linsenanordnung auf die Betrachteraugen abgebildet. Bei Bewegung eines Betrachters übermittelt ein Positionsfinder die neue Position, um im Shutter jeweils die der Position entsprechenden Segmente zu öffnen, um ein Fokussieren der Pixel auf die Augen zu sichern. Im stereoskopischen Betrieb werden im Zeitmultiplex-Verfahren nacheinander ein rechtes und linkes Bild den entsprechenden Augen angeboten. Bei mehreren Betrachtern sind entsprechend mehrere Segmente aufgeschaltet. Für einen monoskopischen Betrieb können alle Segmente des Shutters geöffnet sein.

Eine praktische Realisierung eines solchen Multi-User-Displays ist relativ schwierig, da ein extrem hochauflösender Shutter benötigt wird. Beispielsweise ist bei einer in der Schrift angegebenen Ausführung für 100 mögliche Winkelpositionen von Betrachtern eine Segment-Breite von 2,5 Mikrometer erforderlich, wenn man einen üblichen Pixel-Pitch von 0,25 mm annimmt. Bei 1600 Spalten der Bildmatrix wären im Shutter 160.000 Segmente pro Zeile erforderlich. Außerdem erfordert die Zuordnung der Linsenelemente und der Öffnungen des Shutters zu den Pixeln der Bildmatrix eine sehr hohe Präzision beim Fertigen der Komponenten und dem Ausrichten ihrer Positionen zueinander bei der Montage. Bereits geringfügige Abweichungen in den Maßen der Pixel oder der Segmente oder Verschiebung der Positionen zueinander führen zu erheblichen Funktionsstörungen. Das erfordert eine hohe Stabilität des montierten Displays gegenüber Umwelteinflüssen wie Temperaturänderungen und mechanischen Erschütterungen.

Besonders nachteilig ist, dass bei der Fertigung einzelne Komponenten des Displays nicht problemlos gegeneinander austauschbar sind. Die Bildmatrix, die Linsenanordnungen und der Shutter müssen bezüglich geometrischer Anordnung, Auflösung und Fertigungstoleranzen immer genau aufeinander abgestimmt sein.

Die Druckschrift WO 03/053072 A1 offenbart ein Multi-User-Display mit einem 3D-Trackingsystem und sequentieller Wiedergabe von stereoskopischen Bildern. Die Anordnung enthält hintereinander liegend ein dreidimensional adressierbares Backlight, eine einzige großflächige, voluminöse Abbildungslinse zum Fokussieren und einen Lichtmodulator als Bildmatrix. Das Backlight ermöglicht auch ein Tracking bezüglich der Entfernung der Betrachter vom Display. Das Licht durchläuft fokussierend die Bildmatrix, die alternierend jeweils ein linkes Bild und ein rechtes Bild für die entsprechenden Betrachteraugen moduliert.
Nachteilig sind eine geringe Lichtintensität, da pro Betrachterauge jeweils nur das Licht einer lokal selektierbaren punktförmigen Lichtquelle zum Ausleuchten des gesamten Bildes zur Verfügung steht, die grosse Abbildungslinse sowie die große Tiefe des Displays, die durch das dreidimensionale Backlight entsteht. Um die Aberrationen einer derartig großformatigen Linse im ausseraxialen Bereich zu begrenzen, muss die Brennweite und damit die Gerätetiefe hinreichend groß gewählt werden. Ausserdem ist das dreidimensionale Backlight schwierig herzustellen.

In einer Anzahl von Patentschriften ist dem jeweiligen Abbildungssystem noch eine Feldlinse zugeordnet, die sich im Strahlengang an verschiedenen Orten befinden kann und dadurch unterschiedliche Aufgaben erfüllt.

In der älteren Patentanmeldung DE 2003 103 39 076 (veröffentlicht under DE-A-103 39076) des Anmelders, die zum Anmeldetag dieser Anmeldung noch nicht veröffentlicht war, wird ebenfalls ein Multi-User-Display beschrieben. Diese weist eine Sweet-Spot-Einheit auf mit von einer Tracking- und Bildsteuerung den Augenpositionen nach geführten Svireet-Spots.

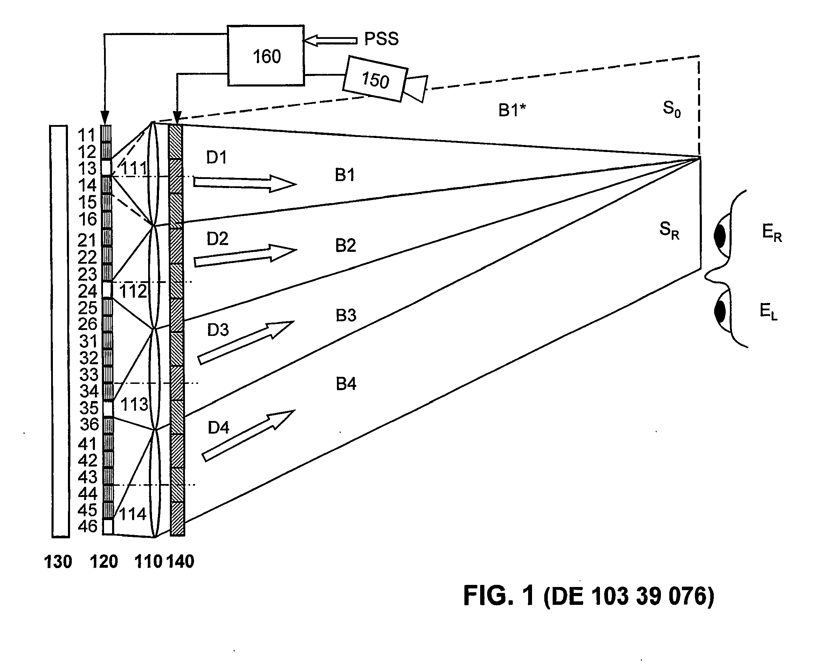

FIG. 1 zeigt das Funktionsprinzip in Draufsicht, jedoch weder maßstabsgerecht noch mit der vollständigen Anzahl an optischen Elementen.
Eine Vielzahl von Linsenelementen 111 ... 114 in einer Abbildungsmatrix 110 bilden schaltbare punktförmige Beleuchtungselemente 11 ... 46 einer Beleuchtungsmatrix 120 auf die Augen ER, E_{L} von Betrachtern ab. Die durch eine großflächige Lichtquelle 130 beleuchtete Beleuchtungsmatrix 120 generiert pro Linsenelement und Betrachter mindestens ein Strahlenbündel B1 ... B4, welche sich durch gezieltes Aktivieren von Beleuchtungselementen 11 ... 46 durch eine Tracking- und Bildsteuerung 160 am Ort der Betrachteraugen zu einem zweidimensionalen Sweet-Spot S_{R} überlagern. Die Abbildungsmatrix 110, die Beleuchtungsmatrix 120 und die Lichtquelle 130 bilden gemeinsam die steuerbare Sweet-Spot-Einheit in Form eines gerichteten Backlights zum Sichtbarmachen eines Bildes einer transmissiven LCD-Bildmatrix 140 aus bestimmten Spotpositionen im Raum, welche die Tracking- und Bildsteuerung 160 ansteuert. In der Praxis sind unter anderem weitaus mehr Linsenelemente 111 ... 114 und Beleuchtungselemente vorhanden. Als Beleuchtungselemente dienen vorteilhaft Subpixel einer LCD-Matrix.

Auf dem Wege zum Betrachter durchfluten die Strahlenbündel B1 ... B4 großflächige die Bildmatrix 140, welche alternierend jeweils nur ein Bild einer stereoskopischen Bildfolge eines Bildsignals PSS enthält. Ein Positionsfinder 150 ermittelt die Anzahl von Betrachtern und die Augenpositionen ER, E_{L} vor dem Display. Entsprechend aktiviert die Tracking- und Bildsteuerung 160 im dargestellten Beispiel die Beleuchtungselemente 13, 24, 35 und 46, um das aktuelle Bild der Folge aus der Augenposition ER sichtbar zu machen. Wie Fig. 1 zeigt, liegen die Beleuchtungselemente 13, 24, 35 und 46 an verschiedenen Positionen in Bezug zur Mitte der folgenden Linsenelemente. Bei einer Bewegung eines Betrachters aktiviert die Tracking- und Bildsteuerung andere Beleuchtungselemente, um das jeweilige Sweet-Spot-Bündel der Bewegung der Augen nach zuführen. Zur alternierenden Darstellung der Stereobilder macht die Tracking- und Bildsteuerung 160 durch Umschalten von Beleuchtungselementen synchron mit jedem Bildwechsel das folgende Bild jeweils für das entsprechende Auge eines bzw. aller Betrachter sichtbar. Für das andere Auge bleibt das Bild während dieser Dauer unbeleuchtet als so genannter Darkspot unsichtbar. Erfolgt die Darbietung der Bildfolge der Bild-Matrix für rechte und linke Augen mit der synchronisierten Ausrichtung auf das entsprechende Auge hinreichend schnell, können die Augen die ihnen dargebotenen Bilder zeitlich nicht mehr auflösen. Beide Augen sehen ohne Übersprechen die Bildfolge als Stereodarstellung.

Die Strahlenbündel B1 ... B4 breiten sich praktisch so aus, dass jedes aktive Beleuchtungselement 13, 24, 35 und 46 in der Ebene der Augenpositionen ER bzw. E_{L} auf einem Durchmesser von mindestens einigen Millimetern vergrößert abgebildet wird. Zur einfachen Darstellung der Funktion bilden in allen Figuren dieses Dokumentes Parallelstrahlenbündel den Sweet-Spot. In der Praxis weicht die Ausbreitung gering von der Kollimation ab. In jedem Fall ist die Sweet-Spot-Einheit so eingestellt, dass jedes Strahlenbündel B1 ... B4 mindestens die Ausdehnung der Sweet-Spot-Fläche abdeckt. Vorteilhaft ist die Sweet-Spot-Fläche mindestens so groß wie ein Betrachterauge. Dadurch kann ein Betrachter ohne Störungen den gesamten Bildschirmbereich der Bildmatrix mit homogener Ausleuchtung betrachten, auch wenn er sich einige Zentimeter bewegt, ohne dass ein Tracking erforderlich wird. Die Anforderungen hinsichtlich Präzision, Funktion und Reaktionsgeschwindigkeit der Tracking- und Bildsteuerung 160 werden damit ebenso wesentlich verringert.

Ein wesentlicher Vorteil der Sweet-Spot-Einheit nach der Patentanmeldung DE 2003 103 39 076 besteht darin, dass beim Herstellen der Einheit unabhängig von der Größe der Pixel in der LCD-Bildmatrix 140 die Breite der Linsenelemente 111, ... 114 so gewählt werden kann, dass jedes Linsenelement zumindest in horizontaler Richtung eine Anzahl N an Beleuchtungselementen 11, ...16 überdeckt, um für N verschiedene Betrachterpositionen pro Betrachter je einen Sweet-Spots zu realisieren. Im dargestellten Ausführungsbeispiel ist aus Gründen der Übersichtlichkeit die Anzahl N = 6. In der Praxis überdeckt horizontal jedes Linsenelement eine noch größere Anzahl an Beleuchtungselementen. Dadurch kann bei vorgegebenem Querschnitt der Beleuchtungselemente 11, ... 46 durch die Wahl des Querschnitts der Linsenelemente 111, ... 114 die Anzahl der möglichen Augenpositionen definiert werden. Um eine hohe Anzahl von möglichen Augenpositionen zu erhalten, muss nicht aufwändig die Struktur der Beleuchtungsmatrix 130 verfeinert werden, sondern es kann relativ einfach die Breite der Linsenelemente 111, ... 114 vergrößert werden.
Vorteilhaft ist die Abbildungsmatrix 110 ein Lentikular oder eine Anordnung aus mehreren Lentikularen und die Linsenelemente 111, ... 114 sind Zylinderlinsen. Da eine Zylinderlinse grundsätzlich vertikal über die gesamte Höhe der Bildmatrix 140 verläuft, überdeckt jedes Linsenelement vertikal mehrere Hundert Beleuchtungselemente in der Beleuchtungsmatrix 120. Da ein alternierendes Umschalten der Sweet-Spots ausschließlich zwischen dem rechten und linken Augen erfolgt, werden zur Vereinfachung der Darstellung nachfolgend nur die Elemente betrachtet, welche die horizontale Ausrichtung der Strahlenbündel B1 ... B4 bewirken. Das Umschalten erfolgt seitens der Beleuchtungsmatrix spaltenweise. Für die Betrachtungen der Erfindung ist es unerheblich, wie viele Beleuchtungselemente vertikal eine Zylinderlinse überdeckt. Dem Lösungsprinzip folgend, kann die Tracking- und Bildsteuerung 160 die Sweet-Spots auch vertikal nachführen. Dieses erfolgt dann analog zur horizontalen Nachführung durch Auswahl von entsprechenden Beleuchtungselementen in der Vertikalen eines zweidimensional ausrichtenden Abbildungssystems.

Zum Erhöhen der Bildhelligkeit und der Breite der Sweet-Spots können vorteilhaft für jedes Strahlenbündel B1 ... B4 mehrere angrenzende Beleuchtungselemente gleichzeitig aktiviert werden.

Vorteilhaft ist auch für das vorliegende Verfahren, dass die Sweet-Spot-Einheit nicht verändert werden muss, wenn die Bildmatrix gewechselt wird.

Weitere Druckschriften US-A-6014164 und EP-A-0570179 zeigen vorstehend beschriebenen Anordnungen ähnliche Systeme.

### Darstellung des technischen Problems

Um die Bildmatrix 140 vollständig einzusehen, muss in jeder Bildzeile pro Linsenelement 111 ... 114 und Augenposition mindestens ein Beleuchtungselement eingeschaltet sein. Außerdem müssen diejenigen Beleuchtungselemente aktiviert sein, deren Strahlenbündel B1 ... B4 jeweils auf eine Augenposition E_{R} bzw. E_{L} in Richtungen D1 ... D4 - gerichtet sind. Wie FIG.1 zeigt, wird dieses mit der Sweet-Spot-Einheit nach der Patentanmeldung

DE 2003 103 39 076 dadurch erreicht, dass die Tracking- und Bildsteuerung 160 für die Linsenelemente in Abhängigkeit von den Richtungen D₁ ... D₄ die entsprechenden Beleuchtungselemente aktiviert.

Im Beispiel realisiert ein aktives drittes Beleuchtungselement 13 die Richtung D1, während ein aktives sechstes Beleuchtungselement 46 die Richtung D4 realisiert.

Das wirkt sich nachteilig auf die praktisch nutzbare Auflösung insbesondere im Randbereich der Beleuchtungsmatrix 120 aus, in dem der Vorrat an ansteuerbaren Positionen reduziert ist. Dieser Effekt schränkt den Sichtwinkel, unter dem ein Betrachter das Bild vollständig betrachten kann, und damit den geometrischen Nachführbereich der Tracking- und Bildsteuerung erheblich ein. Insbesondere für die Funktion eines autostereoskopischen Multi-User-Displays ist dieses ein spürbarer Nachteil, weil für zwei und mehr Betrachter vor dem Display ein möglichst großes Sichtfeld und damit ein großer Nachführbereich der Tracking- und Bildsteuerung wünschenswert sind. Außerdem bilden selbst bei zentraler Betrachterposition Beleuchtungselemente mit den Linsenelementen große Winkel, wie in Fig.1 das Beleuchtungselement 46 zu Linsenelementen 114 zeigt. An diesen Linsen entstehen Aberrationen, die die Homogenität bei der Projektion durch die Bildmatrix erheblich stören.

Das Problem soll nachfolgend an den Linsenelementen 111 und 114 gezeigt werden, die in Randnähe der Abbildungsmatrix 110 liegen. Während beim Linsenelement 111 ein Aktivieren der Beleuchtungselemente 11 bis 13 sinnvoll ist, würde ein aktives Beleuchtungselement 14 ein Strahlenbündel B1* auf eine weniger sinnvolle Spotposition S₀ richten. Da beim Linsenelement 114 bereits das äußerste Beleuchtungselement 46 aktiv ist, kann das Linsenelement 114 die Spotposition S₀ nicht erreichen. In der Praxis könnte daher bei der Position S₀ die Bildmatrix 140 nur ohne den Beitrag des Strahlenbündels B4 eingesehen werden.

Zu ähnlichen Ergebnissen würden im dargestellten Beispiel Betrachtungen mit den Beleuchtungselementen 15, 16, 26 und 41 bis 43 führen. Der Mangel kann zwar für die Position S₀ durch Hinzufügen eines zusätzlichen Beleuchtungselementes behoben werden, das die Abbildungsmatrix 110 vergrößern würde, aber eine grundsätzliche Lösung des Problems bringt dieses nicht, da im Bereich von Linsenelementen 112, 113, die mehr zur Mittelachse liegen, keine zusätzlichen Beleuchtungselemente eingefügt werden können.

Da die Abstände der Beleuchtungselemente stets größer als die Abstände der Linsenelemente sind, treten vor allem an den Rändern der Abbildungsmatrix große Winkel auf, die zu erheblichen Aberrationen führen und damit die homogene Durchleuchtung der Bildmatrix stören.

### Aufgabe der Erfindung

Die vorliegende Erfindung bezieht sich auf ein autostereoskopisches, durch eine Tracking- und Bildsteuerung gesteuertes Multi-User-Display, das sich durch geringen Aufwand an einzelnen Komponenten und deren Justage zueinander, durch flache Bauweise, durch Austauschbarkeit von optischen Komponenten mit abweichenden Geometrien und durch große Helligkeit auszeichnet sowie den dargestellten Nachteil der vorgenannten Lösung, insbesondere die eingeschränkte Nachführbarkeit der Swee-Spot-Einheit vermeidet, Aberrationen verringert und damit die Qualität und vor allem die Homogenität der betrachteten Bilder entscheidend erhöht.

### Wesen der Erfindung

Die Lösung geht von einem autostereoskopischen Multi-User-Display aus, bei dem eine Sweet-Spot-Einheit, die von der Tracking- und Bildsteuerung gesteuert wird, Strahlenbündel mit einem vorgegebenen großen Querschnitt auf verschiedene Augenposition von Betrachtern richtet und fokussiert. Die Sweet-Spot-Einheit stellt ein steuerbares gerichtetes Backlight für eine transmissive Bildmatrix dar. Die Strahlenbündel durchsetzen großflächig eine transmissive Bildmatrix zum sequentiellen Modulieren mit stereoskopischen Bildfolgen und überlagern sich abhängig vom aktuellen Bild der Folge vor dem entsprechenden Auge jedes Betrachters zu einem Sweet-Spot, der das gesamte Bild betrachtbar macht. Die Sweet-Spot-Einheit beinhaltet eine gesteuerte Beleuchtungsmatrix mit einer Vielzahl von diskret aktivierbaren Beleuchtungselementen und eine Abbildungseinrichtung zum Abbilden von Strahlenbündel auf die Sweet-Spots, wobei die Tracking- und Bildsteuerung durch Aktivieren von entsprechenden Beleuchtungselementen jedem Strahlenbündel seine Richtung vorgibt.
Das Problem wird gemäß der Erfindung durch eine Abbildungseinrichtung nach Anspruch 1 gelöst, die sowohl eine Abbildungsmatrix mit einer Vielzahl von Linsenelementen als auch eine Feldlinse enthält, welche der Abbildungsmatrix folgt und diese überdeckt.
Die Feldlinse wirkt weniger im klassischen Sinn, da die Feldlinsen-Funktion durch entsprechende Wahl der Beleuchtungselemente realisiert werden kann. Die Linsen bilden etwa kollimiert die aktiven Beleuchtungselemente vergrößert auf die Sweet-Spots ab. Die Brennweite der Linsenelemente ist entsprechend kurz.

Im Gegensatz dazu ist die Brennweite der Feldlinse sehr viel größer als die der Linsenelemente. Die Feldlinse hat die Aufgabe , einem möglichst gleichen Winkel für die den aktivierten Beleuchtungselementen zugehörigen Linsenelemente zu realisieren. Je Linsen-Pitch werden also möglichst die gleichen zugehörigen Beleuchtungselemente aktiviert. Gleiche Winkel für alle Linsenelemente erlauben neben einem maximalen Tracking-Bereich minimale Aberrationen, die für eine homogene Ausleuchtung der Bildmatrix wichtig sind.

Bewegt sich ein Betrachter lateral, kommen neben der sphärischen Aberration die bekannten Bildstörungen wie Bildfeldkrümmung oder Koma hinzu, die nun aber durch die Abbildung der identischen aktiven Beleuchtungselemente unter den Linsenelementen des Lentikulars minimiert sind. Die Feldlinse bewirkt also, dass ein Sweet-Spot durch solche Beleuchtungselemente gebildet wird, welche minimale Bildstörungen hervorrufen. Bei gegebener Bildqualität wird durch die Feldlinse der Tracking-Bereich vergrößert. Extreme Positionen der aktiven Beleuchtungselemente, wie die Position 46 in Fig.1, treten nur noch bei extremen lateralen Betrachterpositionen auf.

Die Erfindung hat den entscheidenden Vorteil, dass unabhängig von Lage der Linsenelemente alle aktiven Beleuchtungselemente nahezu die gleiche Position zum entsprechenden Linsenelement aufweisen und die Beleuchtungs- und Abbildungsmatrix nur etwa gleichgerichtete, zueinander parallele Strahlenbündel in Richtung des jeweiligen Sweet-Spots erzeugen muss. Dadurch kann der Vorrat an Beleuchtungselementen pro Linsenelement wegen der Gleichheit der Aufschaltungsmuster rationeller ausgenutzt werden kann, was zu einer Erhöhung der ansteuerbaren Positionen und damit zu einer Ausdehnung des Nachführbereiches der Sweet-Spot-Einheit führt. Der für die Nachführung von Sweet-Spots nutzbare Winkelvorrat ist praktisch für alle Strahlenbündel gleich, unabhängig von der Lage des Strahlenbündels in der Abbildungsmatrix.

Wenn sich ein Betrachter aus seiner Betrachterebene entfernt, kann die Tracking- und Bildsteuerung mit einem Positionsfinder die Richtung der Strahlenbündel an die ermittelte die neue Entfernung der Augenpositionen im Raum vor dem Display anpassen. Die identische Zuordnung der Beleuchtungselemente zu den zugehörigen Linsen wird minimal gestört. Durch die Erfindung bleibt für jedes Linsenelement ein hinreichender Vorrat an Beleuchtungselementen verfügbar, um mit der Tracking- und Bildsteuerung durch Ändern der aktivierten Beleuchtungselemente die Richtungen der Strahlenbündel zu korrigieren.

Um die aktivierten Beleuchtungselemente in der Betrachterebene in Sweet-Spots endlicher Größe abzubilden, sind entsprechend kleine Brennweiten der Linsenelemente zu wählen. Nimmt man den Betrachter in der Mitte vor dem Display, etwa in der Brennweite der Feldlinse, an und verwendet für den Sweet-Spot kollimiertes Licht, dann liegen die Beleuchtungselemente in der vorderen Brennebene der Linsenelemente. Bewegt sich der Betrachter lateral, macht sich die Feldkrümmung der Linsenelemente zunehmend bemerkbar, die kollimierten Lichtbündel gehen über in eine fokussierte Abbildung der Beleuchtungselemente. In der Regel wird man bei zentraler Betrachterposition die Linsenelemente näher an den Beleuchtungselementen positionieren als es dem Betrag ihrer Brennweite entspricht. Bei lateraler Bewegung des Betrachters wächst dieser Abstand bis zur Brennweite und darüber hinaus.

Durch geeignete Wahl der Brennweite der Feldlinse kann im Zusammenspiel mit der Brennweite der Linsenelemente ein optimaler Raum dimensioniert werden, in dem mit der Sweet-Spot-Einheit Sweet-Spots für eine hohe 3D-Wiedergabe einstellbar sind.

Die Abbildungsmatrix enthält Abbildungselemente, welche auf mindestens einem Lentikular oder einer Linsenanordnung angeordnet sind. Die Abbildungselemente sind so ausgeführt, dass sie mindestens horizontal jeweils eine Vielzahl steuerbarer Beleuchtungselemente in der Beleuchtungsmatrix überdecken. Damit überdecken sie auch horizontal mehrere Pixel in der Bildmatrix.

Die Beleuchtungsmatrix kann sowohl ein elektronischer Shutter mit in Ort und Transmission frei steuerbaren Beleuchtungselementen in Form von Öffnungen sein, welche durch ein Backlight beleuchtet werden, als auch aktiv leuchtende Beleuchtungselemente mit ansteuerbaren linien- oder matrixförmig angeordneten Strukturen enthalten. Beispiele sind organische LED (OLED) oder Projektionseinheiten auf Basis von DLP, TFT, oder anderes.

Für die vorliegende Erfindung wurde der Begriff Feldlinse nur als allgemeiner Gattungsbegriff verwendet. Ihre eigentliche Funktion ist die Verringerung der optischen Aberrationen und die Vergrößerung des Betrachterbereiches. Wegen der Größe der Linse werden für derartige Optiken in der Regel Fresnel-Linsen verwendet.

Die Feldlinse kann auch als durch die Tracking- und Bildsteuerung steuerbares Holografisches Optisches Element (HOE) ausgebildet sein, bei dem zur Verbesserung des Nachführbereiches die Brennweite variierbar ist.

Durch die funktionelle und konstruktive Trennung der einzelnen Komponenten des Displays ist es möglich, die Anforderungen an die Auflösung der Beleuchtungsmatrix zu reduzieren. Sie bestimmt sich nur noch aus der Anzahl der ansteuerbaren Positionen oder Winkel. Insbesondere ist die Lösung von der Bildmatrix weitgehend unabhängig. So kann für gegebene Größe eine Bildmatrix gegen eine andere mit höherer Auflösung ausgetauscht werden.

Die Abbildungsmatrix kann in ihrer Ausführung auch teilweise oder ganz aus Material bestehen, das in seinen optischen Eigenschaften steuerbar ist, beispielsweise aus Polymer. Zur Verhinderung von Moire-Effekten ist vorgesehen, in Lichtrichtung vor der Bildmatrix ein nicht-polarisierendes streuendes Medium, etwa als Streufolie, anzuordnen.

### Kurzbeschreibung der Figuren

- Fig. 1: eine Prinzipdarstellung eines autostereoskopischen Multi-User-Displays, wie es in der älteren Patentanmeldung DE 103 39 076 beschrieben wurde
- Fig. 2: ein autostereoskopisches Multi-User-Display gemäß der Erfindung mit einer Sweet-Spot-Einheit zum Erzeugen von geometrisch gleichen Sweet- Spots für ein Betrachterauge und einer Abbildungsmatrix
- Fig. 3: ein autostereoskopisches Multi-User-Display gemäß der Erfindung mit einer Sweet-Spot-Einheit zum Erzeugen von Sweet-Spots für das andere Betrachterauge
- Fig. 4: eine schematische Darstellung der Sweet-Spot-Einheit gemäß der Erfindung mit einer Fresnel-Linse
- Fig. 5: eine Sweet-Spot-Einheit gemäß der Erfindung mit aktiven Beleuchtungselementen zum Erzeugen von Sweet-Spot-Bündeln für verschiedene Betrachter
- Fig. 6: eine schematische Darstellung für den Betrieb des Displays im 2D-Modus, wobei nur für einen Betrachter ein Sweet-Spot geschaltet ist
- Fig. 7: eine schematische Darstellung einer Ausführungsform der Sweet-Spot- Einheit unter Verwendung einer Projektionsanordnung als Beleuchtungs- Matrix

### Bevorzugte Ausführungsformen der Erfindung

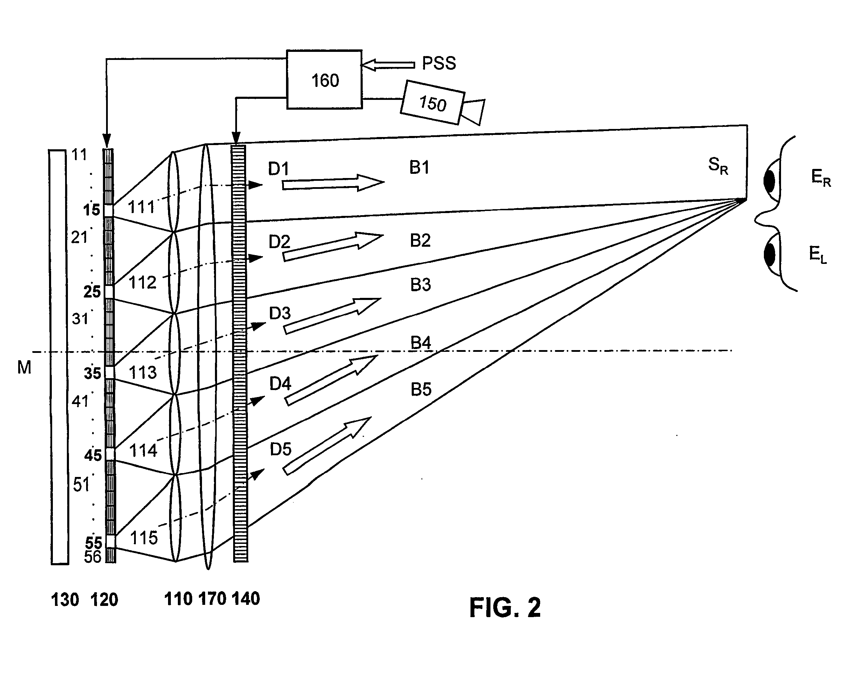

Das erfindungsgemäße autostereoskopische Multi-User-Display ist in Ausführungsbeispielen und den Figuren 2 bis 7 näher dargestellt. Soweit das autostereoskopische Multi-User-Display gemäß der Erfindung gleiche Funktionselemente benutzt, werden in allen Figuren gleiche Referenzzeichen verwendet.

FIG. 2 zeigt die Anordnung gemäß der Erfindung mit einer Abbildungsmatrix 110 mit Linsenelementen 111 ... 115 sowie der Beleuchtungsmatrix 120 zum Erzeugen von je einem Strahlenbündel B1 ... B5 pro Linsenelement 111 ... 115 am Beispiel für das rechte Auge ER eines Betrachters. Als Beleuchtungsmatrix 120 dient im Ausführungsbeispiel ein Shutter, der das Licht einer großflächigen Lichtquelle 130 nutzt. Dieser enthält transmissive Beleuchtungselemente 11 ... 56 und ist ein LCD oder ein FLCD. Die Abbildungsmatrix 110 ist im Beispiel ein Lentikular, in dessen Brennebene etwa die Beleuchtungsmatrix 120 liegt, so dass Strahlenbündel B1 ... B5 die Abbildungsmatrix 110 nahezu als Parallelbündel verlassen. In der Beleuchtungsmatrix 120 weisen alle aktiven Beleuchtungselemente 15, 25, 35, 45 und 55 zum Linsenelement eine gleiche Position auf. Dadurch treten die Strahlenbündel unter gleichem Winkel aus den Linsenelementen 111 ... 115 aus und besitzen gleiche optische und geometrische Eigenschaften. Das betrifft einerseits die Geometrie des Querschnitts und die genannten Aberrationen und Richtungsfehler. Das verbessert zum einen wesentlich die Homogenität aller Sweet-Spots und damit die Qualität der Wiedergabe des Displays. Zum anderen kann die Tracking- und Bildsteuerung 160 auf Grund der sich ergebenen ähnlichen Lage der aktiven Beleuchtungselemente zum Linsenelement für jedes Strahlenbündel B1... B5 auf den gleichen Vorrat an ansteuerbaren Positionen zugreifen. Dadurch wird der geometrischen Nachführbereich der Tracking- und Bildsteuerung erheblich erweitert und ein Nachführen von Sweet-Spots auf die Augen von mehreren Betrachtern mit verschiedenen Entfernungen vom Display durch ein Nachführen der Beleuchtungsmatrix 120 mit der Tracking- und Bildsteuerung 160 erst ermöglicht.

Wie Fig. 2 zeigt, weisen beim Austritt aus der Feldlinse 170 die Strahlenbündel B1... B5 verschiedene Richtungen D1 ... D5 auf und überlagern sich gemeinsam vor dem rechten Auge ER eines Betrachters in einem Sweet-Spot S_{R}. Die Modulation der Strahlenbündel B1 ... B5 erfolgt bildweise, wie zu FIG.1 dargestellt.

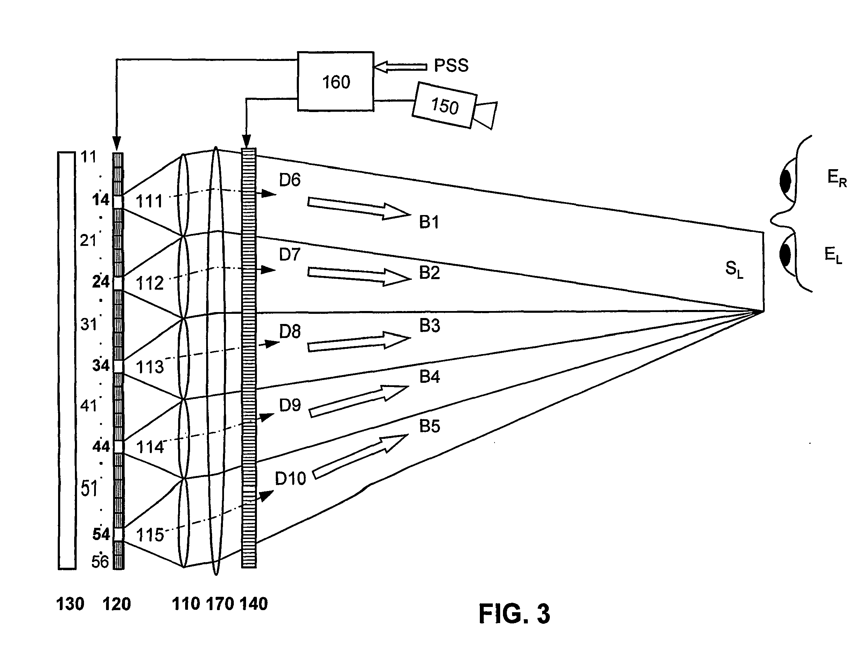

Auf analoge Art und Weise werden die linken Augen der Betrachter anschließend mit dem linken Stereobild versorgt. Dieses zeigt Fig. 3. Nun sind die Beleuchtungselemente 14, 24, 34, 44 und 54 aktiviert. Beim Austritt aus der Feldlinse 170 weisen die Strahlenbündel B1... B5 die verschiedenen Richtungen D6 ... D10 auf und überlagern sich gemeinsam vor dem linken Auge E_{L} des Betrachters in einem Sweet-Spot S_{L}.

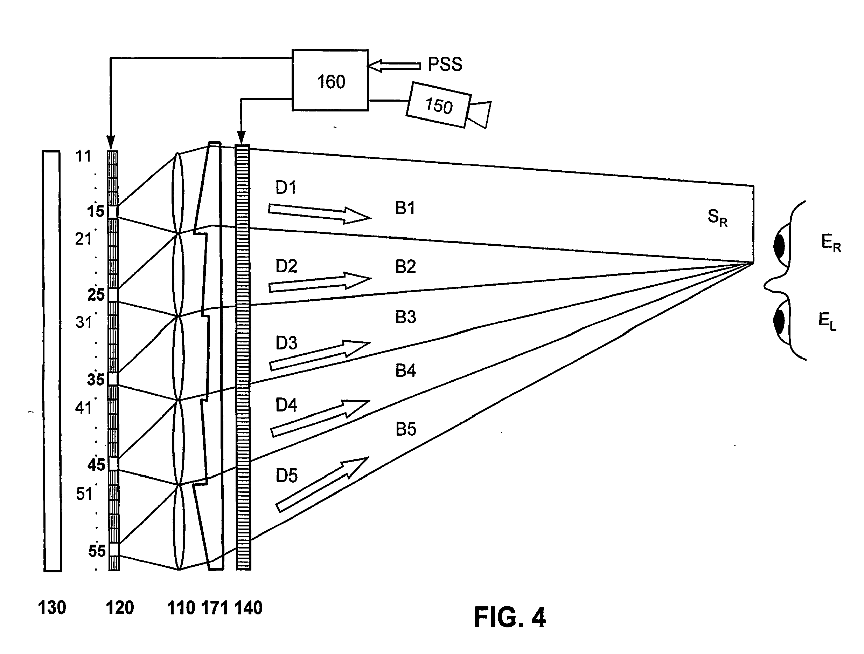

Fig. 4 zeigt, dass anstelle einer kompakten Feldlinse 170 vorteilhaft eine Fresnel-Linse 171 eingesetzt werden kann, die wesentlich raumsparender und preiswerter ist. Die einseitig angeordneten Strukturen der Fresnel-Linse 171 zeigen vorteilhaft in Richtung der Abbildungsmatrix 110. Mit Orientierung der Struktur der Fresnel-Linse 171 in Richtung Bildmatrix 140 entstünden vor allem an den linken oder rechten Rändern des Displays Brechungswinkel, die in die Nähe von Totalreflexion kämen oder diese sogar erreichen würden. Die Stufen der Feldlinse können vorteilhaft bezüglich der Brennweite und der Eintrittswinkel für die Strahlenbündel so ausgeführt sein, dass sich die Strahlenbündel deutlich vor einer optimalen Betrachterentfernung überlagern, ohne dass jedes Strahlenbündel an sich nennenswert konvergiert. Durch die Wahl der Brennweite der Feldlinse kann der Beginn des Arbeitsbereiches, in welchem die Tracking- und Bildsteuerung die Strahlenbündel nachführt festgelegt werden. Deshalb liegt vorteilhaft die Brennweite etwa zwischen der ganzen und halben optimalen Entfernung eines Betrachters vom Display.

Die Abbildungsmatrix 110 der Sweet-Spot-Einheit ist ein Lentikular oder eine streifenförmige oder matrixförmige Abbildungseinheit. Durch die Wahl des Querschnitts der Abbildungselemente im Verhältnis zur Anzahl der überdeckten Öffnungen der Beleuchtungsmatrix wird die Anzahl von Positionen festgelegt, die im Raum prinzipiell wahlfrei angesteuert werden können.

Für ein Lentikular beispielsweise ist der Winkelbereich wegen der auftretenden Aberrationen relativ klein, etwa 0,1 rad. Anstelle von Einzel-Lentikularen kann man zur Unterdrückung der Aberrationen und/oder zur Vergrößerung des Betrachterwinkels auch Doppel-Lentikulare einsetzen. Die geringsten Aberrationen und somit die größten Betrachterwinkel liefern Lentikulare, deren Scheitel in Lichtrichtung zeigen.

Ein einfaches Lentikular mit Einzellinsen weist die bekannten Bildfehler auf, wie sphärische Aberration und Koma. Eine vorteilhafte Ausführungsform zur Reduzierung dieser Fehler ist ein Tandem-Lentikular, das aus zwei parallelen und kollinearen Einzel-Lentikularen besteht. Die Scheitel der Abbildungselemente beider Einzel-Lentikulare weisen in Lichtrichtung, sind in etwa deckungsgleich zueinander angeordnet und weisen einen leicht unterschiedlichen Pitch auf. Eine andere Variante der AbbildungsMatrix ist die Verwendung eines Doppellentikulars, wobei die Pitches der Einzel-Lentikulare nahezu übereinstimmen und die Linsen einander zugekehrt sind.

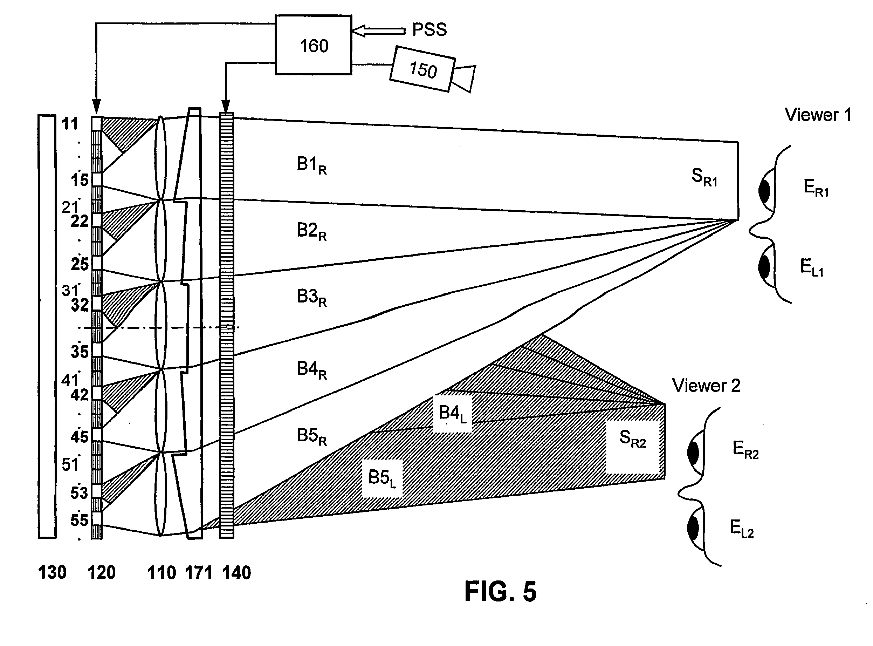

Fig. 5 zeigt die Zuordnung mehrerer Betrachter für eine stereoskopische Wiedergabe. Die Bildmatrix 140 enthält im dargestellten Moment das rechte Stereobild, im vorliegenden Fall für zwei Betrachter. Dabei werden Strahlenbündel B1_{R} ... B5_{R} bzw. B1_{L} ...B5_{L} zu Sweet-Spots S_{R1} und S_{R2} jeweils für das rechte Auge E_{R1} bzw. E_{R2} beider Betrachter durch Aktivieren von entsprechenden Beleuchtungselementen 15, 25, 35, 45 und 55 in der Beleuchtungsmatrix 120 erzeugt. Im folgenden Bild der Folge zeigt die Bildmatrix 140 das linke Stereobild und Sweet-Spots werden nun auf die linken Augen E_{L1} bzw. E_{L2} der Betrachter gerichtet. Zwei oder mehrere Betrachter können auch verschiedene monoskopische Bilder dadurch sehen, dass für jeden Betrachter beim zugehörigen Bild die Sweet-Spots für beide Augen aufgeschaltet werden. Ein Umschalten des Displays in einen monoskopischen Modus für eine beliebige Anzahl von Betrachtern wird dadurch erreicht, dass die gesamte Beleuchtungsmatrix aktiv geschaltet wird. Ein größerer Bereich im Betrachterraum wird so gleichmäßig hell ausgeleuchtet.

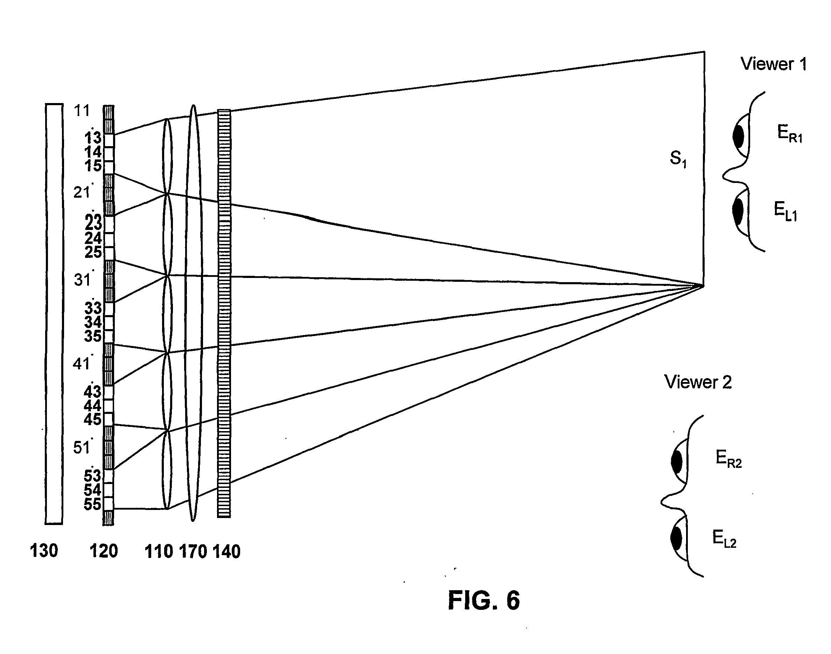

Soll einem Betrachter Information vorenthalten werden, genügt es, die entsprechenden Sweet-Spots abzuschalten. Fig. 6 zeigt dieses ebenfalls für einen monoskopischen Modus. Der Betrachter 1 als z.B. ein Bankangestellter hat mit beiden Augen Einblick durch den Sweet-Spot S₁ auf eine Information, während für Betrachter 2, vielleicht ein Kunde, der Bildschirm dunkel bleibt.

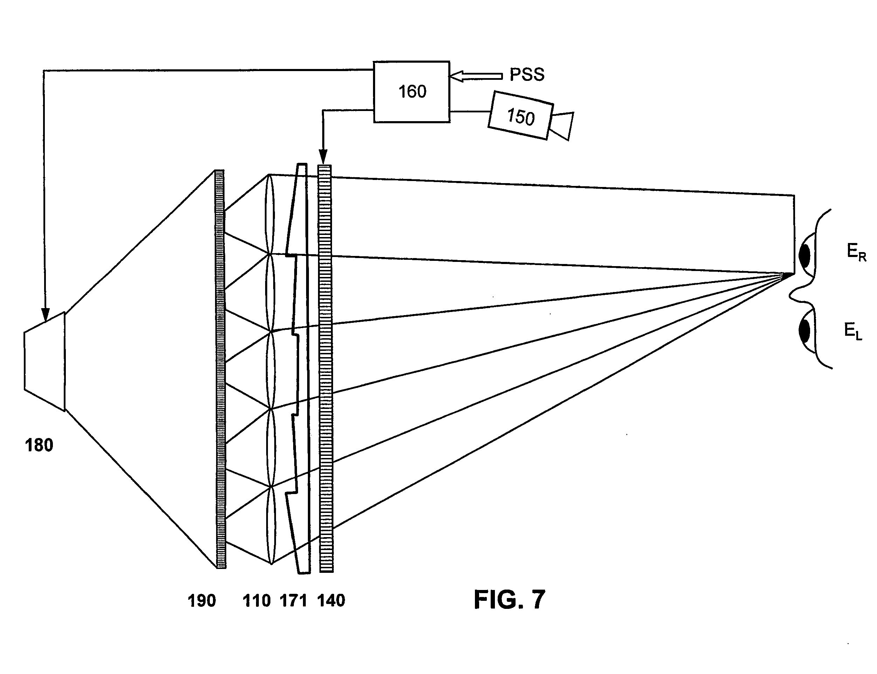

In Fig. 7 dient als Beleuchtungsmatrix ein Projektionssystem 180, das beispielsweise auf DLP-Basis ausgeführt sein kann. Die Abbildungsmatrix 110 und die Fresnel-Linse 171 erzeugen wie dargestellt für jedes Bild der Folge einen entsprechenden Sweet-Spot für die Bildmatrix 140. Die projizierten Bildinhalte werden wie zuvor schon beschrieben in den Betrachterraum abgebildet. Es ist auch möglich, eine Streuscheibe 190 oder/und eine weitere Feldlinse der Abbildungsmatrix 110 vorzuordnen, die zu dieser das Licht lenkt.

Darüber hinaus ist die Erfindung auch vorteilhaft zum sequentiellen Darstellen von Bildern verschiedener Bildfolgen für mehrere Betrachter auf einem Display anwendbar. Beispielsweise kann das Display auch in Kraftfahrzeugen eingesetzt werden, um dem Fahrzeugführer Information des Bordcomputers zur Navigation und zum Betrieb des Fahrzeugs, wie Geschwindigkeit, Umgebungstemperatur, Kraftstoffverbrauch, Betriebsstörungen, und dem Beifahrer Unterhaltungsinformation, wie ein TV-Programm oder ein Video, alternierend anzuzeigen.
Dazu schaltet die Tracking- und Bildsteuerung 160 Sweet-Spots im Takt einer Bildfolgefrequenz alternierend zwischen Fahrzeugführer und Beifahrer um.

Die beschriebene Sweet-Spot-Einheit in Verbindung mit der Bildmatrix realisiert ein autostereoskopisches Multi-User-Display, das eine sehr gute Abbildungsqualität liefert und damit ein breites Anwenderspektrum sichert. Das Display ist sowohl im 2D- und 3D-Modus verwendbar, gleichzeitig für mehrere Betrachter einsetzbar, echtzeitfähig und realisiert trotzt relativ großer Elemente in der Beleuchtungsmatrix eine hohe Auflösung, große Helligkeit und geringe Bautiefe. Die besonders breiten Sweet-Spots gewährleisten eine hohe Betrachterbeweglichkeit. Es ist robust und gestattet es, die insgesamt extrem hohen Genauigkeitsforderungen des Standes der Technik zu verringern. Wegen seiner hohen Qualitätsmerkmale bezüglich der Darstellung ist es für den High-End-Einsatz in den Bereichen Medizin, Technik, Forschung und Entwicklung, in Video-Konferenz-Systemen und in der Werbung und im Low-end-Bereich als Home-Display, für Handheld-Computer und für Videophones sowie für viele andere Anwendungen geeignet.

## Patentansprüche

1. Autostereoskopisches Multi-User-Display zur zeitlich verschachtelten Wiedergabe der linken und rechten Einzelbilder einer stereoskopischen Bildfolge, wobei das Display enthält:
- eine Tracking- und Bildsteuerung (160),
- eine Beleuchtungsmatrix (120) mit separat aktivierbaren Beleuchtungselementen
- eine Abbildungseinrichtung (110, 170) mit Linsenelementen (111... 115) Und
- eine transmissive Bildmatrix (140), zur gennanten zeitlich verschachtelten Wiedergabe der Einzelbilder
bei dem die Tracking- und Bildsteuerung die Beleuchtungselemente synchron mit der Wiedergabe der Bildfolge durch die Bildmatrix und abhängig von ermittelten Augenpositionen (E_{L1}/E_{R1}, E_{L2}/E_{R2}) schaltet, um gleichzeitig mehrere Strahlenbündel (B1 ... B5) alternierend jeweils für die linken bzw. die rechten Augen aller Betrachter bereitzustellen, so dass die Abbildungseinrichtung die Strahlenbündel **durch** die Bildmatrix in Richtungen (D1 ... D10) lenkt, die den linken bzw. rechten Augenpositionen der Betrachter entsprechen, **dadurch gekennzeichnet,**
**dass** die Abbildungseinrichtung aufweist:
- eine Abbildungsmatrix (110), die die genannten Linsenelemente (111...115) mit einer solchen Brennweite enthält, dass diese die aktiven Beleuchtungselemente vergroßert auf die Angenpositionen abbilden,
- eine Feldlinse (170), welche der Abbildungsmatrix (110) in Richtung auf den Betrachter folgt und eine Brennweite aufweist, die viel größer ist als die der Linsenelemente (111...115), um die Abstände der aktivierten Beleuchtungselemente zwischen benachbarten Strahlenbündeln (B1 ... B5) möglichst minimal und konstant zu halten und um die Vorgabe der Richtungen (D1 ... D10) mit der Beleuchtungsmatrix (120) für die Strahlenbündel (B1 ... B5) zu unterstützen,
und **dass** die Beleuchtungsmatrix (120) im Lichtweg vor der transmissiven Bildmatrix (140) liegt, so dass die Strahlenbündel die transmissive Bildmatrix in Richtungen durchleuchten, die den ermittelten Augenpositionen (E_{L1}/E_{R1}, E_{L2}/E_{R2}) entsprechen.

2. Autostereoskopisches Multi-User-Display nach Anspruch 1, bei dem die Abbildungsmatrix (110) und die Beleuchtungsmatrix (120) von einander etwa im Abstand der Brennweite der Linsenelemente (111...115) angeordnet sind.

3. Autostereoskopisches Multi-User-Display nach Anspruch 1, bei dem die Tracking- und Bildsteuerung (160) für jede Augenposition die Beleuchtungsmatrix (130) so steuert, dass ein in der Mitte der Abbildungsmatrix (110) liegendes Strahlenbündel (B3) die Abbildungsmatrix (110) in Richtung Augenposition (E_{L}/E_{R}) verlässt, während die übrigen Strahlenbündel (B1, B2, B4, B5) die Abbildungsmatrix (110) nahezu parallel zum mittleren Strahlenbündel (B3) verlassen, und die Feldlinse (170) alle Strahlenbündel (B1 .... B5) am Ort der entsprechenden Augenpositionen (E_{L1}/E_{R1}, E_{L2}/E_{R2}) überlagert.

4. Autostereoskopisches Multi-User-Display nach Anspruch 1, bei dem die Feldlinse (170) eine Fresnel-Linse ist.

5. Autostereoskopisches Multi-User-Display nach Anspruch 4, bei dem die Stufen der Fresnel-Linse bezüglich der Brennweite und der Eintrittswinkel für die Strahlenbündel so ausgeführt sind, dass sich die Strahlenbündels deutlich nahe den Augenpositionen überlagern, ohne dass jedes Strahlenbündel an sich nennenswert konvergiert.

6. Autostereoskopisches Multi-User-Display nach Anspruch 1, mit einem Positionsfinder (150), der neben den lateralen Augenpositionen (E_{L1}/E_{R1}, E_{L2}/E_{R2}) von Betrachtern auch die Entfernungen der Augenpositionen zur Bildmatrix (140) ermittelt, und bei dem die Tracking- und Bildsteuerung (160) durch Ändern der aktivierten Beleuchtungselemente die Richtungen (D1 ...D5) der Strahlenbündel (B1 ... B5) an die ermittelten Augenpositionen (E_{L1}/E_{R1}, E_{L2}/E_{R2}) im Raum vor dem Display anpasst.

7. Autostereoskopisches Multi-User-Display nach Anspruch 1, bei dem die Brennweite der Feldlinse etwa zwischen der ganzen und halben Entfernung eines Betrachters vom Display liegt.

8. Autostereoskopisches Multi-User-Display nach Anspruch 7, bei dem die Feldlinse ein steuerbares Holografisches Optisches Element (HOE) mit einer steuerbaren Brennweite ist und die Tracking- und Bildsteuerung (160) die Brennweite in Abhängigkeit von den Entfernungen einstellt.

9. Autostereoskopisches Multi-User-Display nach Anspruch 1, bei dem die Abbildungsmatrix mindestens ein Lentikular enthält.

10. Autostereoskopisches Multi-User-Display nach Anspruch 1, bei dem die Beleuchtungsmatrix ein Backlight und einen elektronischen Shutter mit frei in Ort und Transmission ansteuerbaren Öffnungen enthält.

11. Autostereoskopisches Multi-User-Display nach Anspruch 10, bei dem die Bildmatrix und der Shutter in der Geometrie der Pixel gleich sind.

12. Autostereoskopisches Multi-User-Display nach Anspruch 1, bei dem die Beleuchtungsmatrix eine aktiv leuchtende Matrix mit frei in Ort und Intensität ansteuerbaren regelmäßig angeordneten Beleuchtungselementen ist.

13. Autostereoskopisches Multi-User-Display nach Anspruch 1, bei dem die Abbildungsmatrix ganz oder teilweise aus Material besteht, das in seinen optischen Eigenschaften steuerbar ist.

14. Autostereoskopisches Multi-User-Display nach Anspruch 1, bei dem die Beleuchtungsmatrix aus einer Projektionseinheit (190) mit einer vorzugsweise in Lichtrichtung vor der Abbildungsmatrix (110) angeordneten Fresnel-Linse oder/und streuenden Schicht besteht.

15. Autostereoskopisches Multi-User-Display nach Anspruch 1, bei dem für eine homogene Ausleuchtung der Bildmatrix und Vergrößerung der Sichtbarkeit an den Augenpositionen je Abbildungselemen und Bildzeile mehrere benachbarte Beleuchtungselemente gleichzeitig aktivierbar sind.

## Claims

1. Autostereoscopic multi-user display for temporally interlaced imaging of the left and right images of a stereoscopic image sequence, the display including
- a tracking and image controller (160);
- an illumination matrix (120) with illumination elements which can be activated individually;
- an imaging device (110, 170) with lens elements (111 ... 115); and
- a transmissive image matrix (140) for said temporally interlaced imaging of the images,
where the tracking and image controller switches the illumination elements synchronously with the imaging of the image sequence by the image matrix dependent on determined eye positions (E_{L1}/E_{R1}, E_{L2}/E_{R2}), in order to simultaneously provide several bundles of rays (B1 ... B5) in an alternating manner for the left and the right, respectively, eyes of all viewers so that the imaging device directs the bundles of rays passing through the image matrix in directions (D1 ... D10) that correspond to the left and right eye positions of the viewers, **characterised in that** the imaging device comprises
- an imaging matrix (110) that contains said lens elements (111 ... 115) with such a focal distance that said lens elements image the active illumination elements in an enlarged fashion onto the eye positions;
- a field lens (170) that is disposed after the imaging matrix (110) in the direction towards the viewer having a focal distance that is much longer than the focal distance of the lens elements (111 ... 115) in order to keep the distances of the activated illumination elements between adjacent bundles of rays (B1 ... B5) as minimal as possible and constant as well as to assist in giving the directions (D1 ... D10) by the illumination matrix (120) for the bundles of rays (B1 ... B5),
and the illumination matrix (120) is located in the light path before the transmissive image matrix (140) so that the bundles of rays pass through the transmissive image matrix (140) in directions that correspond to the determined eye positions (E_{L1}/E_{R1}, E_{L2}/E_{R2}).

2. Autostereoscopic multi-user display to claim 1, whereby the imaging matrix (110) and the illumination matrix (120) are disposed at a distance between each other approximately equal to the focal distance of the lens elements (111 ... 115).

3. Autostereoscopic multi-user display to claim 1, whereby for each eye position the tracking and image controller (160) controls the illumination matrix (130) so that a bundle of rays (B3) located in the centre of the imaging matrix (110) leaves the imaging matrix (110) in the direction towards the eye position (E_{L}/E_{R}), while all other bundles of rays (B1, B2, B4, B5) leave the imaging matrix (110) nearly parallel to the central bundle of rays (B3), and the field lens (170) superimposes all bundles of rays (B1 ... B5) at the corresponding eye positions (E_{L1}/E_{R1}, E_{L2}/E_{R2}).

4. Autostereoscopic multi-user display to claim 1, whereby the field lens (170) is a Fresnel lens.

5. Autostereoscopic multi-user display to claim 4, whereby the cuts of the Fresnel lens as far as the focal distance and the angle of entry are concerned are designed so that the bundles of rays superimpose clearly near to the eye positions, without each bundle of rays in itself converging considerably.

6. Autostereoscopic multi-user display to claim 1, provided with a position finder (150) that in addition to the lateral eye positions (E_{L1}/E_{R1}, E_{L2}/E_{R2}) of viewers, determines the distances of the eye positions to the image matrix (140), whereby the tracking and image controller (160) adapts the directions (D1 ... D5) of the bundles of rays (B1 ... B5) to the determined eye positions (E_{L1}/E_{R1}, E_{L2}/E_{R2}) in the space in front of the display by changing the activated illumination elements.

7. Autostereoscopic multi-user display to claim 1, whereby the focal distance of the field lens is in the range of approximately between the full and half the distance between a viewer and the display.

8. Autostereoscopic multi-user display to claim 7, whereby the field lens is a controllable holographic optical element (HOE) with a controllable focal distance and the tracking and image controller (160) adjusts the focal distance according to the distances.

9. Autostereoscopic multi-user display to claim 1, whereby the imaging matrix contains at least one lenticular.

10. Autostereoscopic multi-user display to claim 1, whereby the illumination matrix contains a backlight and an electronic shutter which has openings the location and transmission thereof being freely controllable.

11. Autostereoscopic multi-user display to claim 10, whereby the image matrix and the shutter have the same pixel geometry.

12. Autostereoscopic multi-user display to claim 1, whereby the illumination matrix is an actively light-emitting matrix which has illumination elements arranged in a regular pattern the location and transmission of said illumination elements being freely controllable.

13. Autostereoscopic multi-user display to claim 1, whereby the imaging matrix is wholly or partly made of a material the optical properties of which are controllable.

14. Autostereoscopic multi-user display to claim 1, whereby the illumination matrix consists of a projection unit (190) with a Fresnel lens or/and a diffusing layer preferably disposed, seen in the direction of light, before the imaging matrix (110).

15. Autostereoscopic multi-user display to claim 1, whereby for homogeneously illuminating the image matrix and enlarging the visibility at the eye positions several adjacent illumination elements per lens element and image line are activatable at the same time.

## Revendications

1. Écran autostéréoscopique pour plusieurs utilisateurs, destiné à la reproduction d'images individuelles gauches et droites temporellement imbriquées d'une succession d'images stéréoscopiques, ledit écran comportant :
- un dispositif de poursuite et de commande de l'image (160),
- une matrice d'éclairage (120) avec des éléments d'éclairage pouvant être activés séparément,
- un dispositif de reproduction (110, 170) avec des lentilles (111 ... 115), et
- une matrice d'image (140) transmissive pour ladite reproduction temporellement imbriquée des images individuelles,
dans lequel le dispositif de poursuite et de commande de l'image commute les éléments d'éclairage de manière synchrone avec la reproduction de la succession d'images au moyen de la matrice d'image et en fonction des positions des yeux (E_{L1}/E_{R1}, E_{L2}/E_{R2}) déterminées, afin de mettre à disposition simultanément plusieurs faisceaux de rayons (B1 ... B5) en alternance pour l'oeil gauche et l'oeil droit de chacun des observateurs, de telle sorte que le dispositif de reproduction guide le faisceau de rayons à travers la matrice d'image dans des directions (D1 ... D10), qui correspondent aux positions des yeux gauches et droits des observateurs, **caractérisé**
**en ce que** le dispositif de reproduction comporte :
- une matrice de reproduction (110) qui contient lesdites lentilles (111 ... 115) avec une distance focale telle que celles-ci reproduisent sous forme agrandie sur les positions des yeux les éléments d'éclairage actifs,
- une lentille de champ (170), qui suit la matrice de reproduction (110) dans la direction vers l'observateur et dont la distance focale est très supérieure à celle des lentilles (111 ... 115) pour maintenir constantes et aussi petites que possible les distances des éléments d'éclairage activés entre les faisceaux de rayons (B1 ... B5) et pour aider à la définition des directions (D1 ... D10) avec la matrice d'éclairage (120) pour les faisceaux de rayons (B1 ... B5),
et **en ce que** la matrice d'éclairage (120) est située dans la trajectoire de la lumière devant la matrice d'image (140) transmissive, de telle sorte que les faisceaux de rayons traversent la matrice d'image transmissive dans des directions qui correspondent aux positions des yeux (E_{L1}/E_{R1}, E_{L2}/E_{R2}) déterminées.

2. Écran autostéréoscopique pour plusieurs utilisateurs selon la revendication 1, dans lequel la matrice de reproduction (110) et la matrice d'éclairage (120) sont écartées l'une de l'autre selon une distance correspondant à peu près à la distance focale des lentilles (111 ... 115).

3. Écran autostéréoscopique pour plusieurs utilisateurs selon la revendication 1, dans lequel le dispositif de poursuite et de commande de l'image (160) commande, pour chaque position des yeux, la matrice d'éclairage (130) de telle sorte qu'un faisceau de rayons (B3), situé au milieu de la matrice de reproduction (110), quitte la matrice de reproduction (110) en direction de la position des yeux (E_{L1}/E_{R1}), tandis que les autres faisceaux de rayons (B1, B2, B4, B5) quittent la matrice de reproduction (110) à peu près parallèlement au faisceau de rayons (B3) central, et la lentille de champ (170) superpose tous les faisceaux de rayons (B1 ... B5) à l'emplacement des positions (E_{L1}/E_{R1}, E_{L2}/E_{R2}) correspondantes des yeux.

4. Écran autostéréoscopique pour plusieurs utilisateurs selon la revendication 1, dans lequel la lentille de champ (170) est une lentille Fresnel.

5. Écran autostéréoscopique pour plusieurs utilisateurs selon la revendication 4, dans lequel les niveaux de la lentille Fresnel par rapport à la distance focale et à l'angle d'entrée des faisceaux de rayons sont réalisés de telle sorte que les faisceaux de rayons se superposent nettement près des positions des yeux, sans que chaque faisceau de rayons en soi converge de manière notoire.

6. Écran autostéréoscopique pour plusieurs utilisateurs selon la revendication 1, comportant un détecteur de position (150) qui, outre les positions (E_{L1}/E_{R1}, E_{L2}/E_{R2}) latérales des yeux des observateurs, détermine également les distances entre les positions des yeux et la matrice d'image (140), et dans lequel le dispositif de poursuite et de commande de l'image (160), moyennant la variation des éléments d'éclairage activés, ajuste dans l'espace devant l'écran les directions (D1 ... D5) des faisceaux de rayons (B1 ... B5) aux positions des yeux (E_{L1}/E_{R1}, E_{L2}/E_{R2}) déterminées.

7. Écran autostéréoscopique pour plusieurs utilisateurs selon la revendication 1, dans lequel la distance focale de la lentille de champ se situe à peu près entre la distance totale et la moitié de la distance entre un observateur et l'écran.

8. Écran autostéréoscopique pour plusieurs utilisateurs selon la revendication 7, dans lequel la lentille de champ est un élément optique holographique (HOE) commandable avec une distance focale commandable, et le dispositif de poursuite et de commande de l'image (160) règle la distance focale en fonction des écartements.

9. Écran autostéréoscopique pour plusieurs utilisateurs selon la revendication 1, dans lequel la matrice de reproduction contient au moins un élément lenticulaire.

10. Écran autostéréoscopique pour plusieurs utilisateurs selon la revendication 1, dans lequel la matrice d'éclairage comporte un rétroéclairage et un obturateur électronique avec des ouvertures pouvant être librement commandées en lieu et transmission.

11. Écran autostéréoscopique pour plusieurs utilisateurs selon la revendication 10, dans lequel la matrice d'image et l'obturateur sont identiques dans la géométrie des pixels.

12. Écran autostéréoscopique pour plusieurs utilisateurs selon la revendication 1, dans lequel la matrice d'éclairage est une matrice activement lumineuse avec des éléments d'éclairage disposés régulièrement et pouvant être commandés librement en lieu et intensité.

13. Écran autostéréoscopique pour plusieurs utilisateurs selon la revendication 1, dans lequel la matrice d'éclairage est réalisée en totalité ou en partie dans un matériau dont les propriétés optiques peuvent être commandées.

14. Écran autostéréoscopique pour plusieurs utilisateurs selon la revendication 1, dans lequel la matrice d'éclairage est formée par une unité de projection (190) avec une lentille Fresnel, disposée de préférence dans la direction de la lumière devant la matrice de reproduction (110), et/ou avec une couche de diffusion.

15. Écran autostéréoscopique pour plusieurs utilisateurs selon la revendication 1, dans lequel, pour un éclairage homogène de la matrice d'image et un agrandissement de la visibilité au niveau des positions des yeux, plusieurs éléments d'éclairage adjacents peuvent être activés simultanément par élément de reproduction et ligne d'image.
